(19) Europäisches Patentamt
European Patent Office
Office européen des brevets

(11) EP 1 036 968 B1

(12) **FASCICULE DE BREVET EUROPEEN**

(45) Date de publication et mention de la délivrance du brevet:
**03.09.2003 Bulletin 2003/36**

(51) Int Cl.$^7$: **F16L 9/12**

(21) Numéro de dépôt: **00400511.2**

(22) Date de dépôt: **25.02.2000**

# (54) Tube multicouche à base de polyamides pour le transport d'essence

Aus mehreren auf Polyamid basierenden Schichten zusammengesetzter Schlauch für den Kraftstofftransport

Fuel transport tube having multiple layers based on polyamide

(84) Etats contractants désignés:
**AT BE CH CY DE DK ES FI FR GB GR IE IT LI LU MC NL PT SE**

(30) Priorité: **16.03.1999 FR 9903214**

(43) Date de publication de la demande:
**20.09.2000 Bulletin 2000/38**

(73) Titulaire: **Atofina**
**92800 Puteaux (FR)**

(72) Inventeurs:
- **Durand, Jean-Marc**
  **75009 Paris (FR)**
- **Thomasset, Jacques**
  **27300 Bernay (FR)**
- **Merziger, Joachim**
  **27000 Evreux (FR)**
- **Bussi, Philippe Résidence Clairval**
  **27300 Bernay (FR)**

(74) Mandataire: **Neel, Henry**
**Atofina**
**D.C.R.D./D.P.I.**
**4, Cours Michelet,**
**La Défense 10**
**92091 Paris La Défense Cedex (FR)**

(56) Documents cités:
**EP-A- 0 470 606** **EP-A- 0 730 115**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Jouve, 75001 PARIS (FR)

## Description

La présente invention concerne des tubes à base de polyamides pour le transport d'essence et en particulier pour amener l'essence du réservoir d'une automobile jusqu'au moteur.

Pour des raisons de sécurité et de préservation de l'environnement les constructeurs automobiles imposent à ces tubes à la fois des caractéristiques mécaniques comme la résistance et la flexibilité avec une bonne tenue aux chocs à froid (-40°C) ainsi qu'à température élevée. (125°C), et également une très faible perméabilité aux hydrocarbures et à leurs additifs, en particulier les alcools comme le méthanol et l'éthanol. Ces tubes doivent aussi avoir une bonne tenue aux carburants et aux huiles de lubrification du moteur.

Parmi les caractéristiques du cahier des charges de ces tubes, cinq sont particulièrement difficiles à obtenir conjointement de façon simple :

- tenue aux chocs à froid (-40°C), le tube ne se brise pas,
- tenue aux carburants
- tenue à température élevée (125°C),
- très faible perméabilité à l'essence,
- une bonne stabilité dimensionnelle du tube en utilisation avec de l'essence.

Dans les tubes multicouches de structures diverses, la tenue aux chocs à froid reste imprévisible avant d'avoir réalisé les tests normés de résistance aux chocs à froid.

Par ailleurs, il est déjà connu de la demande de brevet EP 0781799 que dans les véhicules automobiles, sous l'effet de la pompe à injection, l'essence circule à grande vitesse dans les canalisations reliant le moteur au réservoir. Dans certains cas, le frottement essence / paroi interne du tube peut générer des charges électrostatiques, dont l'accumulation peut conduire à une décharge électrique (étincelle) capable d'enflammer l'essence avec des conséquences catastrophiques (explosion). Aussi, est-il nécessaire de limiter la résistivité superficielle de la face interne du tube à une valeur en général inférieure à $10^6$ ohms. Il est connu d'abaisser la résistivité superficielle de résines ou matériaux polymériques en leur incorporant des matériaux conducteurs et/ou semiconducteurs tels que le noir de carbone, les fibres en acier, les fibres de carbone, les particules (fibres, plaquettes, sphères) métallisées avec de l'or, de l'argent ou du nickel.

Parmi ces matériaux, le noir de carbone est plus particulièrement employé, pour des raisons économiques et de facilité de mise en oeuvre. En dehors de ses propriétés électroconductrices particulières, le noir de carbone se comporte comme une charge telle que par exemple le talc, la craie, le kaolin. Ainsi, l'homme de l'art sait que lorsque le taux de charges augmente, la viscosité du mélange polymère / charge augmente. De même, lorsque le taux de charge augmente, le module de flexion du polymère chargé augmente. Ces phénomènes connus et prévisibles sont explicités dans "Handbook of Fillers and Reinforcements for Plastics" édité par H.S. Katz et J.V. Milewski - Van Nostrand Reinhold Company - ISBN 0-442-25372-9, voir en particulier le chapitre 2, section II pour les charges en général et le chapitre 16, Section VI pour le noir de carbone en particulier.

Quant aux propriétés électriques du noir de carbone, le bulletin technique "Ketjenblack EC - BLACK 94/01" de la société AKZO NOBEL indique que la résistivité de la formulation chute très brutalement lorsque un taux critique de noir de carbone, appelé seuil de percolation, est atteint. Lorsque le taux de noir de carbone augmente encore, la résistivité diminue rapidement jusqu'à atteindre un niveau stable (zone de plateau). On préfère donc, pour une résine donnée, opérer dans la zone de plateau, où une erreur de dosage n'aura qu'une faible influence sur la résistivité du compound.

On connait aussi de la demande de brevet EP 0 731 308 des tubes à base de polyamides pour le transport d'essence. Ces tubes peuvent avoir une structure tricouche, la couche intérieure comprenant un mélange de polyamide et de polyoléfine à matrice polyamide, la couche extérieure comprenant un polyamide, une couche de liant de coextrusion étant disposée entre la couche intérieure et la couche extérieure.

La couche de liant constitue donc une couche intermédiaire. Les liants cités peuvent être :

- le polyéthylène, le polypropylène, les copolymères de l'éthylène et d'au moins une alpha oléfine, des mélanges de ces polymères, tous ces polymères étant greffés par des anhydrides d'acides carboxyliques insaturés tels que par exemple, l'anhydride maléique. On peut utiliser des mélanges de ces polymères greffés et de ces polymères non greffés.
- les copolymères de l'éthylène avec au moins un produit choisi parmi (i) les acides carboxyliques insaturés, leurs sels, leurs esters, (ii) les esters vinyliques d'acides carboxyliques saturés, (iii) les acides dicarboxyliques insaturés, leurs sels, leurs esters, leurs hémiesters, leurs anhydrides, (iv) les époxydes insaturés ; ces copolymères pouvant être greffés par des anhydrides d'acides dicarboxyliques insaturés tels que l'anhydride maléique ou des époxydes insaturés tels que le méthacrylate de glycidyle. D'autres tubes multicouches sont décrits notamment dans DE

9203865, EP 0470606, EP0731308.

Le but de la présente invention est de proposer un autre tube à base de polyamides ayant une structure d'au moins trois couches et répondant aux caractéristiques actuelles du cahier des charges des constructeurs.

L'invention repose sur le fait que la Demanderesse a trouvé que des copolyamides avaient des propriétés d'adhésion fortes respectivement avec des polyamides, des mélanges de polyamide et de polyoléfine à matrice polyamide et également avec des copolymères d'éthylène et d'alcool vinylique (EVOH).

De plus, ces copolyamides adhèrent bien également à des polyamides ou à des polymères à matrice polyamide contenant du noir de carbone électroconducteur et qui présentent de ce fait des propriétés antistatiques ou de conductivité électrique.

Plus précisément, le but de la présente invention est atteint par un tube multicouche à base de polyamides, tel que décrit dans la revendication 1.

Avantageusement, la première couche ci-dessus est également remplacée par une autre couche, cette autre couche étant formée par un mélange de polyamide $P_1$ bis, de polyoléfine $PO_1$ bis à matrice polyamide $P_1$ bis, et de noir de carbone électroconducteur produisant une résistivité surfacique inférieure à $10^6$ Ω, ou bien cette autre couche étant formée par un mélange de polyamide $P_1$ bis et de noir de carbone électroconducteur produisant une résistivité surfacique inférieure à $10^6$ Ω.

$P_1$ et $P_1$ bis sont identiques ou différents.

$PO_1$ et $PO_1$ bis sont identiques ou différents.

On obtient également un deuxième tube multicouche à base de polyamides, caractérisé par le fait qu'il comporte dans sa direction radiale de l'intérieur vers l'extérieur :

- une première couche formée d'un mélange de polyamide $P_1$ bis et de polyoléfine $PO_1$ bis à matrice polyamide, et contenant du noir de carbone électroconducteur produisant une résistivité surfacique inférieure à $10^6$ Ω, ou bien une première couche formée par un mélange de polyamide $P_1$ bis et de noir de carbone électroconducteur produisant une résistivité surfacique inférieure à $10^6$ Ω,
- une couche formée d'un mélange de polyamide $P_1$ et de polyoléfine $PO_1$ à matrice polyamide $P_1$, ou bien une couche formée d'un polyamide $P_1$,
- une couche formée d'EVOH,
- une couche formée d'un copolyamide,
- une couche formée d'un polyamide $P_3$,

$P_1$, $P_1$ bis et $P_3$ pouvant être identiques ou différents, $PO_1$ et $PO_1$ bis pouvant être identiques ou différents, les couches étant successives et adhérant entre-elles dans leur zone de contact respective.

De préférence, la matrice polyamide $P_1$ ou $P_1$ bis est en Polyamide 6, Polyamide 6,6 ou Polyamide 12.

La polyoléfine $P0_1$ ou $P0_1$ bis de la couche 1 ou 1 bis peut être choisie parmi :

- le polyéthylène,
- le polypropylène,
- les copolymères de l'éthylène et d'une alpha-oléfine,
- les copolymères de l'éthylène / d'un (méth)acrylate d'alkyle,
- les copolymères de l'éthylène / d'un (méth)acrylate d'alkyle / de l'anhydride maléique, l'anhydride maléique étant greffé ou copolymérisé,
- les copolymères de l'éthylène / d'un (méth)acrylate d'alkyle / du méthacrylate de glycidyle, le méthacrylate de glycidyle étant greffé ou copolymérisé.

De préférence, le polyamide $P_3$ est choisi parmi les PA-11 et les PA-12.

Avantageusement, le copolyamide de la couche adhérant à la couche en polyamide $P_3$ est à base de 20 à 80 % en poids de laurolactame ou d'acide 12-aminododécanoïque, et de 80 à 20 % de caprolactame ou d'acide 6 aminocaproïque ou encore de sel de l'hexaméthylènediamine avec un acide dicarboxylique ayant de 6 à 12 atomes de carbone tel que par exemple l'acide adipique ou l'acide nonanedioïque.

De préférence, ce copolyamide choisi parmi le Platamid® MX 1875 T et le Platamid® M 1186 TA.

Avantageusement, la couche de copolymère d'éthylène et d'alcool vinylique (EVOH) a de 25 à 45 % en moles de motif éthylène par rapport à la totalité en moles des motifs et est disposée entre la première et la deuxième couche.

Avantageusement, le tube selon l'invention a un diamètre extérieur allant de 6 à 12 mm, une épaisseur totale de 0,36 mm à 1,95 mm,

une épaisseur de 50 à 500 μm pour la couche en polyamide $P_1$ ou en mélange de polyamide $P_1$ et de polyoléfine

$PO_1$ à matrice polyamide $P_1$,
une épaisseur de 10 à 150 µm pour la couche en copolyamide,
une épaisseur de 300 à 800 µm pour la couche en polyamide $P_3$,

et pour les couches éventuellement présentes :

une épaisseur de 25 à 300 µm pour la couche chargée de noir de carbone électroconducteur,
une épaisseur de 10 à 200 µm pour la couche en EVOH.

Le tube de la présente invention est très peu perméable à l'essence et à ses additifs et présente de très bonnes propriétés mécaniques à basse ou à haute température.

En ce qui concerne la matrice polyamide $P_1$ ou $P_1$ bis de la couche 1 ou 1 bis, on peut utiliser tout polyamide.

On entend par polyamide les produits de condensation :

- d'un ou plusieurs aminoacides, tels les acides aminocaproïque, amino-7-heptanoïque, amino-11-undécanoïque et amino-12-dodécanoïque d'un ou plusieurs lactames tels que caprolactame, oenantholactame et laurolactame ;
- d'un ou plusieurs sels ou mélanges de diamines telles l'hexaméthylène-diamine, la dodécaméthylènediamine, la métaxylyènediamine, le bis-p-aminocyclohexylméthane et la triméthylhexaméthylène diamine avec des diacides tels que les acides isophtalique, téréphtalique, adipique, azélaïque, subérique, sébacique et dodécanedicarboxylique ;

ou des mélanges de tous ces monomères ce qui conduit à des copolyamides.

Les diamines aliphatiques sont des α,ω-diamines contenant entre les groupes amino terminaux au moins 6 atomes de carbone, de préférence de 6 à 10. La chaîne carbonée peut être linéaire (polyméthylènediamine) ou ramifiée ou encore cycloaliphatique. Des diamines préférées sont l'hexaméthylènediamine (HMDA), la dodécaméthylènediamine, la décaméthylènediamine.

Les diacides carboxyliques peuvent être aliphatiques, cycloaliphatiques ou aromatiques. Les diacides carboxyliques aliphatiques sont des α,ω-diacides carboxyliques possédant au moins 4 atomes de carbone (non compris les atomes de carbone des groupes carboxyliques), de préférence au moins 6, dans la chaîne carbonée linéaire ou ramifiée. Les diacides sont les acides azélaïque, sébacique et 1,12-dodécanoïque. A titre d'illustration de tels PA, on peut mentionner :

le polyhexaméthylènesebacamide (PA-6,10),
le polyhexaméthylènedodécanediamide (PA-6,12),
le poly(undécanoamide) (PA-11),
le poly(laurolactame (2-Azacyclotridécanone) (PA-12),
le polydodécaméthylènedodécanediamide (PA-12,12),
le polycapronamide (PA-6),
le polyhexaméthylèneadipamide (PA-6,6).

Les PA ont une masse moléculaire moyenne en nombre $\overline{M}n$ en général supérieure ou égale à 5000. Leur viscosité inhérente (mesurée à 20°C pour un échantillon de 0,5 g dans 100 g de méta-crésol) est en général supérieure à 0,7.

On peut utiliser des mélanges de polyamide. On utilise avantageusement le PA-6 et le PA-6,6 et le PA 12.

On entend par polyoléfines des polymères comprenant des motifs oléfines tels que par exemple des motifs éthylène, propylène, butène-1, et leurs homologues supérieurs.

A titre d'exemple, on peut citer :

- le polyéthylène, le polypropylène, les copolymères de l'éthylène avec des alphaoléfines. Ces produits pouvant être greffés par des anhydrides d'acides carboxyliques insaturés tels que l'anhydride maléique ou des époxydes insaturés tels que le méthacrylate de glycidyle.
- les copolymères de l'éthylène avec au moins un produit choisi parmi (i) les acides carboxyliques insaturés, leurs sels, leurs esters (ii) les esters vinyliques d'acides carboxyliques saturés, (iii) les acides dicarboxyliques insaturés, leurs sels, leurs esters, leurs hémiesters, leurs anhydrides (iv) les époxydes insaturés.

Ces copolymères de l'éthylène pouvant être greffés par des anhydrides d'acides dicarboxyliques insaturés ou des époxydes insaturés.

- les copolymères blocs styrène / éthylène-butène /styrène (SEBS) éventuellement maléisés.

On peut utiliser des mélanges de deux ou plusieurs de ces polyoléfines.
On utilise avantageusement :

- le polyéthylène,
- le propylène,
- les copolymères de l'éthylène et d'une alpha-oléfine,
- les copolymères de l'éthylène / d'un (méth)acrylate d'alkyle,
- les copolymères de l'éthylène / d'un (méth)acrylate d'alkyle / de l'anhydride maléique, l'anhydride maléique étant greffé ou copolymérisé,
- les copolymères de l'éthylène / d'un (méth)acrylate d'alkyle / du méthacrylate de glycidyle, le méthacrylate de glycidyle étant greffé ou copolymérisé.

Il est recommandé pour faciliter la formation de la matrice de polyamide, et si les polyoléfines ont peu ou pas de fonctions pouvant faciliter la compatibilisation, d'ajouter un agent compatibilisant.
L'agent compatibilisant est un produit connu en soi pour compatibiliser les polyamides et les polyoléfines.
On peut citer par exemple :

- le polyéthylène, le polypropylène, les copolymères éthylène propylène, copolymères éthylène-butène, tous ces produits étant greffés par de l'anhydride maléique ou du méthacrylate de glycidyle.
- les copolymères éthylène / (méth)acrylate d'alkyle / anhydride maléique, l'anhydride maléique étant greffé ou copolymérisé,
- les copolymères éthylène / acétate de vinyle /anhydride maléique, l'anhydride maléique étant greffé ou copolymérisé,
- les deux copolymères précédents dans lesquels l'anhydride maléique est remplacé par le méthacrylate de glycidyle,
- les copolymères éthylène / acide (méth)acrylique éventuellement leurs sels,
- le polyéthylène, le propylène ou les copolymères éthylène propylène, ces polymères étant greffés par un produit présentant un site réactif avec les amines ; ces copolymères greffés étant ensuite condensés avec des polyamides ou des oligomères polyamides ayant une seule extrémité amine.

Ces produits sont décrits dans les brevets FR 2 291 225 et EP 342 066 dont le contenu est incorporé dans la présente demande.
La quantité de polyamide formant la matrice dans la couche intérieure peut être comprise entre 50 et 95 parties pour 5 à 50 parties de polyoléfines.
La quantité de compatibilisant est la quantité suffisante pour que la polyoléfine se disperse sous forme de nodules dans la matrice polyamide. Elle peut représenter jusqu'à 20 % du poids de la polyoléfine. On fabrique ces polymères de la couche intérieure par mélange de polyamide, de polyoléfine et éventuellement de compatibilisant selon les techniques usuelles de mélange à l'état fondu (bi vis, Buss, monovis).
Ces mélanges de polyamide et de polyoléfine de la couche 1 ou 1 bis peuvent être plastifiés et éventuellement contenir des charges telles que du noir de carbone qui permet de rendre cette couche antistatique ou électriquement conductrice.
Selon une forme avantageuse de l'invention, la quantité de polyamide de la couche 1 ou 1 bis est comprise entre 50 et 75 parties pour 100 parties du mélange polyamide / polyoléfine.
On décrit maintenant des formes preferées des mélanges de polyamide et de polyoléfine. Ces mélanges peuvent être utilisés dans la couche intérieure éventuellement avec du noir conducteur et/ou être utilisés sans noir conducteur pour améliorer l'adhesion de la couche intérieure contenant du noir conducteur.
**Selon une première forme préférée de l'invention** la polyoléfine comprend (i) un polyéthylène haute densité (HDPE) et (ii) un mélange d'un polyéthylène (C1) et d'un polymère (C2) choisi parmi les élastomères, les polyéthylènes de très basse densité et les copolymères de l'éthylène, le mélange (C1) + (C2) étant cogreffé par un acide carboxylique insaturé.
**Selon une deuxième forme préférée de l'invention** la polyoléfine comprend (i) du polypropylène et (ii) une polyoléfine qui résulte de la réaction d'un polyamide (C4) avec un copolymère (C3) comprenant du propylène et un monomère insaturé X, greffé ou copolymérisé.
**Selon une troisième forme préférée de l'invention** la polyoléfine comprend (i) un polyéthylène de type LLDPE , VLDPE ou metallocene et (ii) un copolymère éthylène - (meth)acrylate d'alkyle -anhydride maléique.
**S'agissant de la première forme** les proportions sont avantageusement les suivantes (en poids) :

60 à 70 % de polyamide,
5 à 15 % du mélange de (C1) et (C2) cogreffé
le complément en polyéthylène haute densité .

S'agissant du polyéthylène haute densité sa densité est avantageusement comprise entre 0,940 et 0,965 et le MFI entre 0.1 et 5 g/10 min. ( 190°C 2,16 kg).
Le polyéthylène (C1) peut être choisi parmi les polyéthylènes cités plus haut. Avantageusement (C1) est un polyéthylène haute densité (HDPE) de densité comprise entre 0,940 à 0,965. Le MFI de (C1) est (sous 2,16 kg - 190°C) entre 0,1 et 3 g/10 min.

Le copolymère (C2) peut être par exemple un élastomère éthylène / propylène (EPR) ou éthylène / propylène / diène (EPDM). (C2) peut être aussi un polyéthylène de très basse densité (VLDPE) qui est soit un homopolymère de l'éthylène, soit un copolymère de l'éthylène et d'une alpha oléfine. (C2) peut aussi être un copolymère de l'éthylène avec au moins un produit choisi parmi (i) les acides carboxyliques insaturés, leurs sels, leurs esters, (ii) les esters vinyliques d'acides carboxyliques saturés (iii) les acides dicarboxyliques insaturés, leurs sels, leurs esters, leurs hemiesters, leurs anhydrides. Avantageusement (C2) est un EPR.

Avantageusement on utilise 60 à 95 parties de (C1) pour 40 à 5 parties de (C2).

Le mélange de (C1) et (C2) est greffé avec un acide carboxylique insaturé c'est-à-dire (C1) et (C2) sont cogreffés. On ne sortirait pas du cadre de l'invention en utilisant un dérivé fonctionnel de cet acide. Des exemples d'acide carboxylique insaturés sont ceux ayant 2 à 20 atomes de carbone tels que les acides acrylique, méthacrylique, maléique, fumarique et itaconique. Les dérivés fonctionnels de ces acides comprennent par exemple les anhydrides, les dérivés esters, les dérivés amides, les dérivés imides et les sels métalliques (tels que les sels de métaux alcalins) des acides carboxyliques insaturés.

Des acides dicarboxyliques insaturés ayant 4 à 10 atomes de carbone et leurs dérivés fonctionnels, particulièrement leurs anhydrides, sont des monomères de greffage particulièrement préférés. Ces monomères de greffage comprennent par exemple les acides maléique, fumarique, itaconique, citraconique, allylsuccinique, cyclohex-4-ène-1,2-dicarboxylique, 4-méthyl-cyclohex-4-ène-1,2-dicarboxylique, bicyclo(2,2,1)-hept-5-ène-2,3-dicarboxylique, x-méthylbicyclo(2,2,1)-hept-5-ène-2,3-dicarboxylique, les anhydrides maléique, itaconique, citraconique, allylsuccinique, cyclohex-4-ène-1,2-dicarboxylique, 4-méthylènecyclohex-4-ène-1,2-dicarboxylique, bicyclo(2,2,1)hept-5-ène-2,3-dicarboxylique, et x-méthylbicyclo(2,2,1)hept-5-ène-2,2-dicarboxylique. On utilise avantageusement l'anhydride maléique.

Divers procédés connus peuvent être utilisés pour greffer un monomère de greffage sur le mélange de (C1) et (C2). Par exemple, ceci peut être réalisé en chauffant les polymères (C1) et (C2) à température élevée, environ 150° à environ 300°C, en présence ou en l'absence d'un solvant avec ou sans générateur de radicaux.

Dans le mélange de (C1) et (C2) modifié par greffage obtenu de la façon susmentionnée, la quantité du monomère de greffage peut être choisie d'une façon appropriée mais elle est de préférence de 0,01 à 10 %, mieux de 600 ppm à 2 % par rapport au poids de (C1) et (C2) greffés. La quantité du monomère greffé est déterminée par dosage des fonctions succiniques par spectroscopie IRTF. Le MFI de (C1) et (C2) ayant été cogreffés est de 5 à 30 g/ 10 min. (190°C - 2,16 kg) de préférence 13 à 20.

Avantageusement le mélange de (C1) et (C2) cogreffés, est tel que le rapport $MFI_{10}$ / $MFI_2$ est supérieur à 18,5, $MFI_{10}$ désignant l'indice d'écoulement à 190°C sous une charge de 10 kg et $MFI_2$ l'indice sous une charge de 2,16 kg. Avantageusement le $MFI_{20}$ du mélange des polymères (C1) et (C2) cogreffés est inférieur à 24. $MFI_{20}$ désigne l'indice d'écoulement à 190°C sous une charge de 21,6 kg.

**S'agissant de la deuxième forme** de l'invention les proportions sont avantageusement les suivantes (en poids) :

60 à 70 % de polyamide,
20 à 30 % de polypropylène
3 à 10 % d'une polyoléfine qui résulte de la réaction d'un polyamide (C4) avec un copolymère (C3) comprenant du propylène et un monomère insaturé X, greffé ou copolymérisé.

Le MFI du polypropylène est avantageusement inférieur à 0,5 g/10 min (230°C - 2,16 kg) et de préférence compris entre 0,1 et 0,5. De tels produits sont décrits dans EP 647681.

On décrit maintenant le produit greffé de cette deuxième forme de l'invention. On commence par préparer (C3) qui est soit un copolymère du propylène et d'un monomère insaturé X, soit un polypropylène sur lequel on greffe un monomère insaturé X. X est tout monomère insaturé pouvant être copolymérisé avec le propylène ou greffé sur le polypropylène et possédant une fonction pouvant réagir avec un polyamide. Cette fonction peut être par exemple un acide carboxylique, un anhydride d'acide dicarboxylique ou un epoxyde. A titre d'exemple de monomère X on peut citer l'acide (méth)acrylique, l'anhydride maléique et les epoxydes insaturés tels que le (méth)acrylate de glycidyle.

On utilise avantageusement l'anhydride maléique. S'agissant des polypropylènes greffés on peut greffer X sur des polypropylènes homo ou copolymères, tels que des copolymères éthylène propylène majoritaires en propylène (en moles). Avantageusement (C3) est tel que X est greffé. Le greffage est une opération connue en soi.

(C4) est un polyamide ou un oligomère de polyamide. Des oligomères de polyamide sont décrits dans EP 342066 et FR 2291225. Les polyamides (ou oligomères) (C4) sont les produits de condensation des monomères déjà cités plus haut. On peut utiliser des mélanges de polyamides. On utilise avantageusement le PA-6, le PA-11, le PA 12, le copolyamide à motifs 6 et motifs 12 (PA-6/12), et le copolyamide à base de caprolactame, hexaméthylènediamine et acide adipique (PA-6/6.6). Les polyamides ou oligomères (C4) peuvent être à terminaisons acides, amine ou monoamine. Pour que le polyamide ait une terminaison monoamine il suffit d'utiliser un limiteur de chaîne de formule

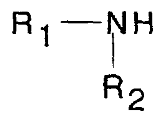

dans laquelle :

$R_1$ est l'hydrogène ou un groupement alkyle linéaire ou ramifié contenant jusqu'à 20 atomes de carbone,
$R_2$ est un groupement ayant jusqu'à 20 atomes de carbone alkyle ou alcenyle linéaire ou ramifié, un radical cycloaliphatique saturé ou non, un radical aromatique ou une combinaison des précédents. Le limiteur peut être par exemple la laurylamine ou l'oleylamine.

Avantageusement (C4) est un PA-6, un PA-11 ou un PA-12. La proportion de C4 dans C3 + C4 en poids est avantageusement comprise entre 0,1 et 60 %. La réaction de (C3) avec (C4) s'effectue de préférence à l'état fondu. On peut par exemple malaxer (C3) et (C4) dans une extrudeuse à une température généralement comprise entre 230 et 250°C. Le temps de séjour moyen de la matière fondue dans l'extrudeuse peut être compris entre 10 secondes et 3 minutes et de préférence entre 1 et 2 minutes.

**S'agissant de la troisième forme** les proportions sont avantageusement les suivantes (en poids) :

60 à 70 % de polyamide,
5 à 15 % d'un copolymère éthylène -(meth)acrylate d'alkyle -anhydride maléique.
le complément est un polyéthylène de type LLDPE , VLDPE ou metallocene; avantageusement la densité de ce polyethylene est comprise entre 0,870 et 0,925, et le MFI est compris entre 0,1 et 5 (190°C - 2.16 kg).

Avantageusement les copolymères éthylène - (méth)acrylate d'alkyle - anhydride maléique comprennent de 0,2 à 10 % en poids d'anhydride maléique, jusqu'à 40 % et de préférence 5 à 40 % en poids de (méth)acrylate d'alkyle. Leur MFI est compris entre 2 et 100 (190°C - 2,16 kg). Le terme "(méth)acrylate d'alkyle" désigne avantageusement les méthacrylates et les acrylates d'alkyle en C1 à C8, et peut être choisi parmi l'acrylate de méthyle, l'acrylate d'éthyle, l'acrylate de n-butyle, l'acrylate d'iso butyle, l'acrylate d'éthyl-2-hexyle, l'acrylate de cyclohexyle, le méthacrylate de méthyle et le méthacrylate d'éthyle.

La température de fusion est comprise entre 80 et 120°C. Ces copolymères sont disponibles dans le commerce. Ils sont produits par polymérisation radicalaire à une pression pouvant être comprise entre 200 et 2500 bars.

A titre d'exemple, on peut aussi utiliser les mélanges suivants (en % poids) :

1)

- 55 à 70 % de PA-6,
- 5 à 15 % d'un copolymère éthylène propylène majoritaire en polypropylène greffé par de l'anhydride maléique puis condensé ensuite avec des oligomères monoaminés de caprolactame,
- le complément à 100 % en polypropylène.

2)

- 55 à 70 % de PA-6,
- 5 à 15 % d'au moins un copolymère de l'éthylène avec (i) un (méth)acrylate d'alkyle ou un ester vinylique d'acide carboxylique insaturé et (ii) un anhydride d'acide carboxylique insaturé ou un époxyde insaturé greffé ou copolymérisé,

- le complément en polyéthylène.

3)

- 55 à 70 % de PA-6.
- 5 à 15 % de polyéthylène ou copolymères de l'éthylène et d'une alphaoléfine greffé par de l'anhydride maléique ou du méthacrylate de glycidyle.
- le complément en polyéthylène haute densité.

La couche extérieure est en polyamide. Par polyamide au sens de la présente invention, on entend les polyamides ou PA qui contiennent des motifs aliphatiques et/ou cycloaliphatiques et/ou aromatiques.

Avantageusement, on utilise le polyamide 11 ou le polyamide 12. Avantageusement, le polyamide de la couche extérieure est plastifié par des plastifiants usuels tels que le n-butyl benzène sulfonamide (BBSA) et les polymères comprenant des blocs polyamides et des blocs polyéthers. Ces polymères à blocs résultent de la condensation de blocs polyamides à extrémités carboxyliques avec, soit des polyétherdiols, soit des polyétherdiamines, soit un mélange de ces polyéthers. Cette couche extérieure peut contenir aussi des additifs anti-oxydants et des charges usuelles telles que du noir de carbone. D'une manière générale, les plastifiants du type blocs polyamides et blocs polyéthers pouvant être ajoutés dans la couche extérieure sont ceux décrits dans la demande de brevet FR 94 14521.

La couche adhérant à la couche en polyamide $P_3$ est en copolyamide.

Les copolyamides utilisables dans la présente invention ont une température de fusion (Norme DIN 53736B) comprise entre 60 et 200°C et une viscosité relative en solution comprise entre 1,3 et 2,2 (Norme DIN 53727, solvant m-crésol, concentration 0,5 g/100 ml, température 25°C, viscosimètre Ubbelohde). Leur rhéologie à l'état fondu est de préférence proche de celle des matériaux des couches P1 et P3.

Les copolyamides proviennent, par exemple, de la condensation d'acides alpha-oméga aminocarboxyliques de lactames ou de diacides carboxyliques et diamines.

Selon un premier mode préféré de l'invention les copolyamides résultent par exemple de la condensation d'au moins deux acides alpha oméga aminocarboxyliques ou d'au moins deux lactames ayant de 6 à 12 atomes de carbone ou d'un lactame et d'un acide aminocarboxylique n'ayant pas le même nombre d'atomes de carbone en présence d'un limiteur de chaîne pouvant être par exemple une monoamine ou une diamine ou un monoacide carboxylique ou un diacide carboxylique. Parmi les limiteurs de chaîne on peut citer notamment l'acide adipique, l'acide azélaïque, l'acide stéarique, la dodecanediamine. A titre d'exemple d'acide alpha oméga aminocarboxylique on peut citer l'acide aminocaproïque, l'acide aminoundécanoïque et l'acide aminododécanoïque.

A titre d'exemple d'acide dicarboxylique on peut citer l'acide adipique, l'acide nonanedioïque, l'acide sébacique et l'acide dodécanédioïque.

A titre d'exemple de lactame on peut citer le caprolactame et le laurolactame (2-Azacyclotridécanone).

Selon un deuxième mode préféré de l'invention les copolyamides résultent de la condensation d'au moins un acide alpha-oméga aminocarboxylique (ou un lactame), au moins une diamine et au moins un diacide carboxylique. L'acide alpha oméga aminocarboxylique, le lactame et le diacide carboxylique peuvent être choisis parmi ceux cités plus haut.

La diamine peut être une diamine aliphatique branchée, linéaire ou cyclique ou encore arylique.

A titre d'exemples on peut citer l'hexaméthylènediamine, la pipérazine, l'isophorone diamine (IPD), le méthyl pentaméthylènediamine (MPDM), la bis(aminocyclohéxyl) méthane (BACM), la bis(3-méthyl-4 aminocyclohéxyl) méthane (BMACM).

A titre d'exemples de copolyamides on peut citer les suivants :

a) 6 / 12 / IPD.6
dans laquelle :

6 désigne des motifs résultant de la condensation du caprolactame,
12 désigne des motifs résultant de la condensation du laurolactame (2-Azacyclotridécanone),
IPD.6 désigne des motifs résultant de la condensation de l'isophorone diamine et de l'acide adipique. Les proportions en poids sont respectivement 20 / 65 / 15.

La température de fusion est de 125°C à 135°C.

b) 6 / 6.6 / 12
dans laquelle :

6.6 désigne des motifs hexaméthylèneadipamide (l'hexaméthylènediamine condensée avec l'acide adipique).

Les proportions en poids sont respectivement 40 / 20 / 40.
La température de fusion est de 115°C à 127°C.

Les procédés de fabrication des copolyamides sont connus de l'art antérieur et ces copolyamides peuvent être fabriqués par polycondensation, par exemple en autoclave.
Les tubes de l'invention peuvent être produits par coextrusion.
Ces tubes, destinés à amener l'essence du réservoir des automobiles au moteur, ont un diamètre extérieur en général allant de 6 à 12 mm et leur épaisseur varie en général de 0,8 à 2 mm. La couche 1 a une épaisseur en général d'au moins 50 μm et de préférence de 100 à 500 μm.
La couche 1 bis chargée en noir de carbone électroconducteur a une épaisseur en général allant de 25 à 300 μm et de préférence de 50 à 150 μm.
La couche 2 en copolyamide a une épaisseur en général d'au moins 10 μm et de préférence de 20 à 100 μm.
La couche 2bis d'EVOH a une épaisseur de 10 à 200 μm.
La couche 3 a une épaisseur en général d'au moins 300 μm et de préférence de 400 à 800 μm.
Ces tubes multicouche peuvent être cylindriques de diamètre constant ou annelés.
De manière classique, ces tubes peuvent comporter des gaines de protection notamment en caoutchouc pour les protéger des points chauds du moteur.
La présente invention sera mieux comprise à l'aide des dessins annexés et des exemples suivants donnés à titre purement illustratifs.
Dans ces dessins sont représentés de manière schématique, en section radiale et en vues partielles, des tubes cylindriques de révolution autour de leur axe longitudinal et, plus précisément, à la :

Figure 1 : un tube trois couches.
Figure 2 : un tube trois couches où la couche intérieure au tube est chargée de noir de carbone électroconducteur.
Figure 3 : un tube quatre couches dans lequel une couche supplémentaire suit la couche intérieure chargée de noir de carbone électroconducteur.
Figure 4 : un tube quatre couches dans lequel une couche d'EVOH a été ajoutée au tube de la Fig. 1.
Figure 5 : un tube quatre couches dans lequel la couche intérieure au tube est chargée de noir de carbone électroconducteur.
Figure 6 : un tube cinq couches dans lequel une couche supplémentaire suit la couche intérieure chargée de noir de carbone électroconducteur.

Dans ces figures les références suivantes désignent les couches composées par les matières suivantes :

1 : un mélange de polyamide $P_1$ et de polyoléfine $PO_1$, à matrice polyamide $P_1$ ou bien un polyamide $P_{1,}$

1 bis : un mélange de polyamide $P_1$ bis et de polyoléfine $PO_1$ bis chargée de noir de carbone électroconducteur ou bien un polyamide $P_1$ bis chargé de noir de carbone électroconducteur, 2 : un copolyamide,
2 bis : un EVOH,
3 : un polyamide $P_3$.

**Partie expérimentale**

Les produits des exemples sont des produits commercialisés par la Société ELF ATOCHEM (France).
On a fabriqué par coextrusion des tubes de diamètre extérieur 8 mm et d'épaisseur 1 mm.
Exemple comparatif N° 1 - Tube N° 1 Rilsan®10 (couche ext)/ Orévac® 18302 / Orgalloy® 10.
Le tube est fabriqué selon la demande de brevet EP 0 731 308 A1 ; il comporte trois couches.
La couche extérieure d'une épaisseur de 480 μm est constituée essentiellement d'un polyamide dont la formulation est la suivante :

- 85 % de polyamide 12 ayant une viscosité inhérente de 1,65
- 7 % de n-butylbenzène sulfonamide (BBSA)
- 6 % d'élastomère thermoplastique à base de polyétherblocamide de dureté shore D égale à 55 et de point de fusion 159°C
- 2 % d'additifs (colorants, lubrifiants, stabilisants).

La couche intérieure d'une épaisseur de 400 μm est un mélange constitué par :

- 65 parties en poids de PA-6 de MFI (indice de fluidité) 23 g / 10 min à 235°C sous 2,16 kg (ISO 1133) formant matrice
- 25 parties en poids d'un PE basse densité linéaire de MFI égal à 0,9 g / 10 min à 190°C sous 2,16 kg et de densité 0,920 (ISO 1872)
- 10 parties en poids d'un copolymère éthylène /acrylate de butyle / anhydride maléique contenant 6 % en poids d'acrylate et 3 % en poids d'anhydride, et de MFI de 5 g / 10 min, à 190°C sous 2,16 kg.

Le melt index dudit mélange est de 2 g / 10 min à 235°C sous 2,16 kg. Ce mélange contient de plus de manière classique de 0,5 à 1 partie en poids d'additifs (colorants, lubrifiants, stabilisants).
La couche intermédiaire de 120 µm d'épaisseur est un polyéthylène linéaire greffé anhydride maléique de melt index 1 g / 10 min à 190°C sous 2,16 kg. Sa température de fusion est de 124°C.
Exemple N° 2 - Tube N° 2 Rilsan® 10/ Platamid® MX 1875 T / Orgalloy® 11.
La structure de ce tube est analogue à celle du tube de la figure 1.
La couche extérieure 3 est identique à la couche extérieure du tube N° 1 de l'exemple comparatif N° 1.
La couche intérieure 1 d'une épaisseur de 400 µm est un mélange comprenant :

- 65 parties en poids de PA-6 de MFI 23 g/10 min à 235°C sous 2,16 kg, formant matrice,
- 25 parties en poids de polyéthylène HDPE de densité 0,953 et de melt index 0,3 g / 10 min sous 2,16 kg à 190°C
- 10 parties de polyéthylène greffé anhydride maléique, de melt index 0,4 g / 10 min 190°C, 2,16 kg et de température de fusion 134°C.

Le melt index du mélange à 235°C sous 2,16 kg est égal à 1,5 g / 10 min. Ce mélange contient de plus, de manière classique, 0,5 à 1 partie en poids d'additifs (colorants, lubrifiants, stabilisants).
La couche intermédiaire 2 en Platamid® MX 1875 T a une épaisseur de 120 µm et est un copolyamide produit par polycondensation de 60 % en poids de laurolactame et de 40 % en poids de caprolactame. Ce copolyamide a un domaine de température de fusion de 130 - 140°C (Norme DIN 53736 B) et une viscosité relative en solution de 1,75 - 1,90 (selon la Norme DIN 53727, m-crésol, 0,5 g / 100 ml, 25°C viscosimètre Ubbelohde).
Exemple N° 3 - Tube N°3 Rilsan® 10/ Platamid® M 1186 TA / Orgalloy® 11.
La couche extérieure 3 de ce tube est identique à celle du tube N° 2.
La couche intérieure 1 est identique à celle du tube N° 2.
La couche intermédiaire 2 d'une épaisseur de 120 µm est un copolyamide produit par polycondensation de 70 % en poids de laurolactame et 30 % en poids de sel de l'hexaméthylènediamine et de l'acide azélaïque (nonanedioïque).
Le copolyamide composant la couche intermédiaire a une viscosité relative en solution (DIN 53727) de 1,7 à 1,9 et une température de fusion de 140°C à 155°C.
Exemple N° 4 - Tube N° 4 Rilsan® 10/ Platamid MX 1875 T / EVOH / Orgalloy® 11.
La structure de ce tube est analogue à celle du tube de la figure 4.
Le tube est constitué de 4 couches :

- une couche extérieure 3 de 450 µm d'épaisseur
- une couche intermédiaire 2 de 50 µm d'épaisseur
- une couche 2 bis de copolymère éthylène-alcool vinylique (EVOH) de 100 µm d'épaisseur
- une couche interne 1 de 400 µm d'épaisseur

La couche extérieure 3 a une formulation identique à la couche extérieure 3 du tube N° 2 de l'exemple N° 2. La couche intérieure 1 a une formulation identique à la couche intérieure 1 du tube N° 2.
La couche intermédiaire 2 a une formulation identique à la couche intermédiaire 2 du tube N° 2.
La couche d'EVOH est fabriquée à partir d'un EVOH commercialisé par la Société NIPPON GOHSEI et a le grade référencé PC-DCAE (3203) sous la marque SOARNOL®. Ce grade a les caractéristiques suivantes :

- Teneur molaire en motif éthylène : 32 %
- Melt Index, 2,16 kg à 190°C : 1,7 g/10 min, à 230°C : 5 g/10 min.

Les propriétés des tubes précédents sont rapportées dans le tableau I suivant :

Tableau I

| | Tube 1 comparatif | Tube 2 | Tube 3 | Tube 4 |
|---|---|---|---|---|
| Choc à -40°C<br>GM 213 M | pas de casse | pas de casse | pas de casse | pas de casse |
| Perméabilité<br>M15 60°C<br>SAE 1737 | >300 | <250 | <250 | <100 |
| Traction 23°C (1)<br>Allongement à la rupture (%) | 180 | >220 | >220 | >220 |
| Tenue au vieillissement thermique (2)<br>demi-vie à 125°C (heures) | 250 | 500 | 500 | 500 |
| Tenue au vieillissement thermique (3)<br>Choc -30°C | au moins 1 casse | pas de casse | pas de casse | pas de casse |
| Stabilité dimensionnelle (4)<br>Variation d'allongement (%) | ≥ 5 % | ≤ 3 % | ≤ 3 % | ≤ 3 % |

(1) : les valeurs d'allongement à la rupture sont mesurées en effectuant un essai de traction sur le tube.

(2) : Le temps de demi-vie correspond à une diminution de moitié de la valeur initiale. Les valeurs d'allongement à la rupture sont mesurées en effectuant un essai de traction sur le tube.

(3) : Test de choc réalisé selon la méthode Renault D42 1235 - C200 / 50 / -30°C. La résistance aux chocs est mesurée après exposition du tube à la température de 125°C pendant 750 heures.
Les tubes 2, 3 et 4 selon la présente invention ont une meilleure tenue au vieillissement thermique (2) et (3), un allongement à la rupture supérieure et une perméabilité inférieure meilleure, que les valeurs correspondantes du tube 1 comparatif.

(4) : Test de variation d'allongement (%) sur tubes multicouches ; mesures effectuées avant et après immersion 1800 h à 23°C dans l'essence M15.

**Revendications**

**1.** Tube multicouche à base de polyamides comprenant dans sa direction radiale de l'intérieur vers l'extérieur :

- une première couche (1) formée d'un polyamide $P_1$ ou bien d'un mélange de polyamide $P_1$ et de polyoléfine $PO_1$ à matrice polyamide $P_1$ ,
- une couche (2 bis) formée d'EVOH,
- une couche (2) formée d'un copolyamide à base de 20 à 80 % en poids de laurolactame ou d'acide 12-aminododécanoïque, et de 80 à 20 % de caprolactame ou d'acide 6 aminocaproïque ou encore de sel de l'hexaméthylénediamine avec l'acide nonanedioïque,
- une couche (3) formée d'un polyamide $P_3$ choisi parmi les PA 11 et les PA 12,

$P_1$ et $P_3$ pouvant être identiques ou différents, les couches (1), (2), (2 bis) et (3) étant successives et adhérant entre-elles dans leur zone de contact respective.

**2.** Tube selon la revendication 1 dans lequel la première couche (1) est remplacée par une autre couche (1 bis), cette autre couche (1 bis) étant formée soit de polyamide $P_1$ bis soit d'un mélange de polyamide $P_1$ bis et de polyoléfine $PO_1$ bis à matrice polyamide et contenant du noir de carbone électroconducteur produisant une résistivité surfacique inférieure à $10^6$ Ω.

**3.** Tube selon la revendication 1 comprenant une couche supplémentaire (1 bis) disposée à l'intérieur de la couche (1), les couches (1) et (1 bis) adhérant entre-elles dans leur zone de contact respective, cette autre couche (1 bis) étant formée soit de polyamide $P_1$ bis soit d'un mélange de polyamide $P_1$ bis et de polyoléfine $PO_1$ bis à matrice polyamide et contenant du noir de carbone électroconducteur produisant une résistivité surfacique inférieure à $10^6\ \Omega$.

**4.** Tube selon l'une des revendications 1 à 3, dans lequel le polyamide $P_1$ ou $P_1$ bis est choisi parmi le polyamide 6, le polyamide 6,6 et le polyamide 12.

**5.** Tube selon l'une des revendications 1 à 4, dans lequel la polyoléfine $PO_1$ ou $PO_1$ bis est choisie parmi :

- le polyéthylène,
- le polypropylène,
- les copolymères de l'éthylène et d'une alpha-oléfine,
- les copolymères de l'éthylène / d'un (méth)acrylate d'alkyle,
- les copolymères de l'éthylène / d'un (méth)acrylate d'alkyle / de l'anhydride maléique, l'anhydride maléique étant greffé ou copolymérisé,
- les copolymères de l'éthylène / d'un (méth)acrylate d'alkyle / du méthacrylate de glycidyle, le méthacrylate de glycidyle étant greffé ou copolymérisé.

**6.** Tube selon l'une des revendications 1 à 5, et qui a les dimensions suivantes :

un diamètre extérieur allant de 6 à 12 mm, une épaisseur totale de 0,36 mm à 1,95 mm,
une épaisseur de 50 à 500 µm pour la couche (1) en polyamide $P_1$ ou en mélange de polyamide $P_1$ et de polyoléfine $PO_1$ à matrice polyamide $P_{1,}$
une épaisseur de 10 à 150 µm pour la couche (2) en copolyamide,
une épaisseur de 300 à 800 µm pour la couche (3) en polyamide $P_3$, et pour les couches éventuellement présentes :

une épaisseur de 25 à 300 µm pour la couche (1 bis) chargée de noir de carbone électroconducteur,
une épaisseur de 10 à 200 µm pour la couche (2 bis) en EVOH.

**Patentansprüche**

**1.** Mehrschichtiges Rohr auf Basis von Polyamiden, umfassend in seiner Radialrichtung von innen nach außen:

- eine erste Schicht (1), die aus einem Polyamid $P_1$ oder auch einer Mischung aus Polyamid $P_1$ und Polyolefin $PO_1$ mit Polyamidmatrix $P_1$ gebildet ist,
- eine Schicht (2bis), die aus EVOH gebildet ist,
- eine Schicht (2), die aus einem Copolyamid auf Basis von 20 bis 80 Gew.% Laurolactam oder 12-Aminododecansäure und von 80 bis 20 % Caprolactam oder 6-Aminocapronsäure oder auch von Hexamethylendiaminsalz mit Nonandionsäure gebildet ist,
- eine Schicht (3), die aus einem Polyamid $P_3$, das unter den PA11 und PA12 ausgewählt wird, gebildet ist,

wobei $P_1$ und $P_3$ identisch oder unterschiedlich sein können, wobei die Schichten (1), (2), (2bis) und (3) aufeinander folgend und in ihrem jeweiligen Kontaktbereich aneinander haftend sein können.

**2.** Rohr nach Anspruch 1, bei dem die erste Schicht (1) durch eine andere Schicht (1bis) ersetzt ist, wobei diese andere Schicht (1bis) entweder aus Polyamid Plbis oder aus einer Mischung aus Polyamid Plbis und Polyolefin $PO_1$ mit Polyamidmatrix gebildet ist und elektrisch leitendes Rußschwarz enthält, das einen spezifischen Oberflächenwiderstand von weniger als $10^6\Omega$ erzeugt

**3.** Rohr nach Anspruch 1, umfassend eine Zusatzschicht (1bis), die im Inneren der Schicht (1) angeordnet ist, wobei die Schichten (1) und (1bis) aneinander in ihren jeweiligen Kontaktbereichen anhaften, wobei diese weitere Schicht (1bis) entweder aus Polyamid P1bis oder aus einer Mischung aus Polyamid P1bis und Polyolefin $PO_1$bis mit Polyamidmatrix gebildet ist und elektrisch leitendes Rußschwarz enthält, das einen Oberflächenwiderstand von weniger als $10^6\Omega$ erzeugt.

**4.** Rohr nach einem der Ansprüche 1 bis 3, bei dem das Polyamid P1 oder P1bis unter Polyamid 6, Polyamid 6,6 und Polyamid 12 ausgewählt wird.

**5.** Rohr nach einem der Ansprüche 1 bis 4, bei dem das Polyolefin $PO_1$ oder $PO_1$bis ausgewählt wird unter:

- Polyethylen,
- Polypropylen,
- Copolymeren des Ethylens und eines Alpha-Olefins,
- Copolymeren des Ethylens / eines Alkyl(meth)acrylats,
- Copolymeren des Ethylens / eines Alkyl(meth)acrylats / des Maleinanhydrids,

wobei das Maleinanhydrid gepfropft oder copolymerisisert ist,

- Copolymeren des Ethylens / eines Alkyl(meth)acrylats / des Glycidylmethacrylats, wobei das Glycidylmethacrylat gepfropft oder copolymerisiert ist.

**6.** Rohr nach einem der Ansprüche 1 bis 5, das folgende Abmessungen aufweist:

einen Außendurchmesser von 6 bis 12 mm, eine Gesamtdicke von 0,36 mm bis 1,95 mm,

eine Dicke von 50 bis 500 µm für die Schicht (1) aus Polyamid P1 oder aus einer Mischung aus Polyamid P1 und Polyolefin $PO_1$ mit Polyamidmatrix P1,

eine Dicke von 10 bis 150 µm für die Schicht (2) aus Copolyamid,

eine Dicke von 300 bis 800 µm für die Schicht (3) aus Polyamid $P_3$,

und für die eventuell vorhandenen Schichten:

eine Dicke von 25 bis 300 µm für die Schicht (1bis), die mit elektrisch leitendem Rußschwarz beaufschlagt ist,

eine Dicke von 10 bis 200 µm für die Schicht (2bis) aus EVOH.

## Claims

**1.** Multilayer tube based on polyamides, comprising, in its radial direction, from the inside to the outside:

- a first layer (1) formed from a polyamide $P_1$ or else from a polyamide $P_1$/polyolefin $PO_1$ blend having a polyamide $P_1$ matrix,
- a layer (2a) formed from EVOH,
- a layer (2) formed from a copolyamide, based on 20 to 80% by weight of laurolactam or 12-amino-dodecanoic acid, and on 80 to 20% of caprolactam or of 6-aminocaproic acid, or else a salt of hexamethylenediamine with nonanedioic acid,
- a layer (3) formed from a polyamide $P_3$, chosen from PA-11 polyamides and PA-12 polyamides, in which $P_1$ and $P_3$ may be identical or different, the layers (1), (2), (2a) and (3) being successive and adhering to each other in their respective contact region.

**2.** Tube according to Claim 1, in which the first layer (1) is replaced with another layer (1a), this other layer (1a) being formed either from polyamide $P_1$a or from a polyamide $P_1$a/polyolefin $PO_1$a blend having a polyamide matrix and containing electrically conductive carbon black producing a surface resistivity of less than $10^6$ Ω.

**3.** Tube according to Claim 1, comprising an additional layer (1a) placed inside the layer (1), the layers (1) and (1a) adhering to each other in their respective contact region, this other layer (1a) being formed either from a polyamide P1 or from a polyamide $P_1$a/polyolefin $PO_1$a blend having a polyamide matrix and containing electrically conductive carbon black producing a surface resistivity of less than $10^6$ Ω.

4. Tube according to one of Claims 1 to 3, **characterized in that** the polyamide $P_1$ or $P_1a$ is chosen from nylon-6, nylon-6,6 and nylon-12.

5. Tube according to one of Claims 1 to 4, **characterized in that** the polyolefin $PO_1$ or $PO_1a$ is chosen from:

- polyethylene;
- polypropylene;
- copolymers of ethylene with an alpha-olefin;
- ethylene/alkyl (meth)acrylate copolymers;
- ethylene/alkyl (meth)acrylate/maleic anhydride copolymers, the maleic anhydride being grafted or copolymerized;
- ethylene/alkyl (meth)acrylate/glycidyl methacrylate copolymers, the glycidyl methacrylate being grafted or copolymerized.

6. Tube according to one of Claims 1 to 5, having the following dimensions:

an outside diameter ranging from 6 to 12 mm and a total thickness of 0.36 mm to 1.95 mm,

- a thickness of 50 to 500 μm for the layer (1) made of polyamide $P_1$ or polyamide $P_1$/polyolefin $PO_1$ blend having a polyamide $P_1$ matrix;
- a thickness of 10 to 150 μm for the layer (2) made of copolyamide;
- a thickness of 300 to 800 μm for the layer (3) made of polyamide $P_3$;

and for the optionally present layers:

- a thickness of 25 to 300 μm for the layer (1a) filled with electrically conductive carbon black;
- a thickness of 10 to 200 μm for the layer (2a) made of EVOH.

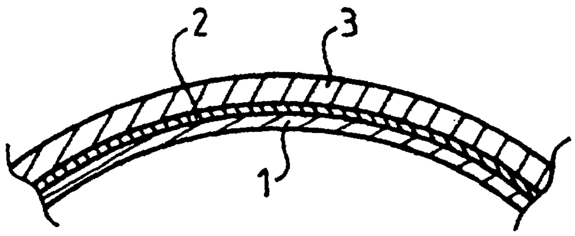


FIG.1

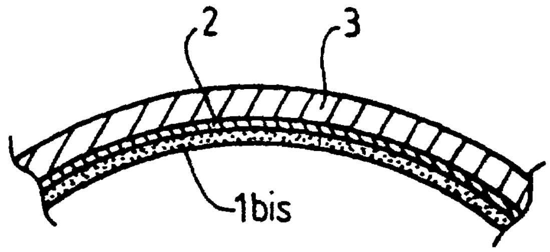


FIG.2

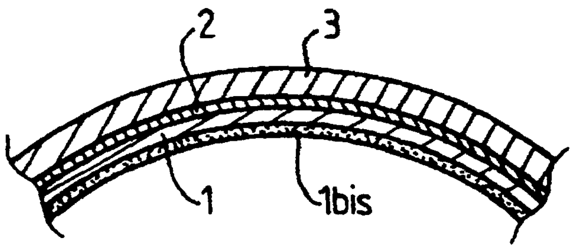


FIG.3

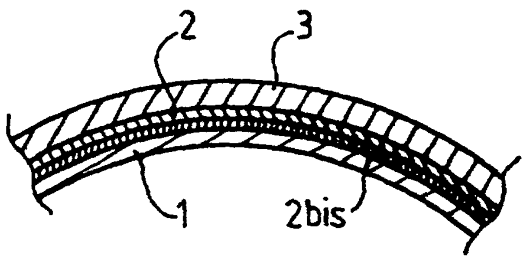


FIG.4

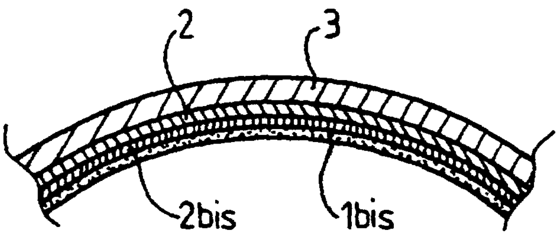


FIG.5

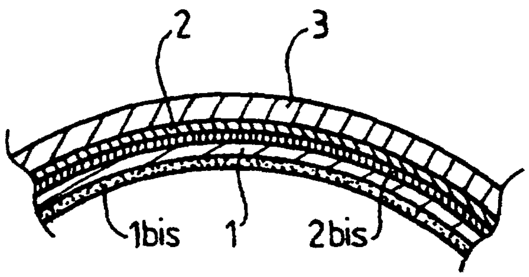


FIG.6